# EUROPEAN PATENT SPECIFICATION

(11) **EP 4 245 067 B1**
(45) Date of publication and mention of the grant of the patent: **30.07.2025**
(21) Application number: 21926167.4
(22) Date of filing: 22.02.2021
(51) Int. Cl.: H04W 48/16, H04W 48/18, H04W 60/04

(54) **APPARATUS AND METHOD OF WIRELESS COMMUNICATION**
VORRICHTUNG UND VERFAHREN ZUR DRAHTLOSEN KOMMUNIKATION
APPAREIL ET PROCÉDÉ DE COMMUNICATION SANS FIL

(43) Date of publication of application: 20.09.2023
(73) Proprietor: GUANGDONG OPPO MOBILE TELECOMMUNICATIONS CORP., LTD., Wusha, Chang'an Dongguan Guangdong 523860 (CN)
(72) Inventor: CHIN, Chenho, Dongguan, Guangdong 523860 (CN); LU, Fei, Dongguan, Guangdong 523860 (CN); CHEN, Jingran, Dongguan, Guangdong 523860 (CN)
(74) Representative: Novagraaf Technologies
(86) International application number: PCT/CN2021/077281
(87) International publication number: WO 2022/174450

(56) References cited:
- WO-A1-2006/114219
- CN-A- 106 686 545
- CN-A- 110 602 764
- CN-A- 110 602 764
- GB-A- 2 585 466
- US-A1- 2012 077 495
- US-A1- 2014 031 033
- US-A1- 2014 342 732
- US-A1- 2014 342 732
- US-A1- 2020 252 863
- US-A1- 2020 252 863

## Description

### BACKGROUND OF DISCLOSURE

### 1. Field of the Disclosure

The present disclosure relates to the field of communication systems, and more particularly, to a user equipment, a network device and and a method of wireless communication, which can provide a good communication performance and/or high reliability. 2. Description of the Related Art

In order to steer a user equipment (UE) to register to a public land mobile network (PLMN) in the UE location country, a network node monitors whether the PLMN the UE is accessing, is a PLMN that is allowed in the UE location. If the network node, based on information received from a base station or as the result of an earlier UE location procedure is aware that the target PLMN is not allowed in the present UE location, then the network node rejects a non-access stratum (NAS) request and includes recommended mobile country codes (MCCs) referring to the MCCs that are allowed in the present UE location. If the network node hasn't got sufficiently accurate UE location, the network node may let a NAS procedure proceed and initiate UE location request in order to determine the possible need to deregister the UE later, if it turns out that the UE registered PLMN is not allowed in the present UE location. However, management, control, and/or use of MCC information have not been addressed.

Therefore, there is a need for an apparatus (such as a user equipment (UE) and/or a network device) and a method of wireless communication, which can solve issues in the prior art, provide a method on management, control, and/or use of MCC information, improve power saving, provide saving of wasted signalling radio resources, provide a good communication performance, and/or provide high reliability. Related technologies are known from patent application no. GB2585466A, US2020/252863A1; and CN110602764A.

In particular, US2020/252863A1 discloses that a user equipment obtains a mobile country code (Mobile Country Code (MCC) of a roaming area and a preferential roaming list, where the preferential roaming list is used to indicate information about at least one network that a user preferentially attempts to register with when the user is roaming.

### SUMMARY

The invention is defined by the independent claims Preferred embodiments are set out in the dependent claims. An object of the present disclosure is to propose a user user equipment (UE), a network device and a method of wireless communication, which can solve issues in the prior art, provide a method on management, control, and/or use of MCC information, improve power saving, provide saving of wasted signalling radio resources, provide a good communication performance, and/or provide high reliability.

### BRIEF DESCRIPTION OF DRAWINGS

In order to illustrate the embodiments of the present disclosure or related art more clearly, the following figures will be described in the embodiments are briefly introduced. It is obvious that the drawings are merely some embodiments of the present disclosure, a person having ordinary skill in this field can obtain other figures according to these figures without paying the premise.
FIG. 1 is a block diagram of one or more user equipments (UEs) and a network device of communication in a communication network system according to an embodiment of the present disclosure.
FIG. 2 is a flowchart illustrating a method of wireless communication by a user equipment (UE) according to an embodiment of the present disclosure.
FIG. 3 is a flowchart illustrating a method of wireless communication by a network device according to an embodiment of the present disclosure.
FIG. 4 is a block diagram illustrating a mobile equipment (ME) and a universal subscriber identity module (USIM) of a UE according to an embodiment of the present disclosure.
FIG. 5 is a block diagram illustrating a ME and a multi-universal subscriber identity module (MUSIM) of a UE, where in MUSIM is multiple occurrences of individual USIM each with its own distinct user subscription and profile, according to an embodiment of the present disclosure.
FIG. 6 is a schematic diagram illustrating a mobile country code (MCC) information according to an embodiment of the present disclosure.
FIG. 7 is a schematic diagram illustrating a MCC information according to an embodiment of the present disclosure.
FIG. 8 is a schematic diagram illustrating a MCC information according to an embodiment of the present disclosure.
FIG. 9 is a schematic diagram illustrating a reject cause X list according to an embodiment of the present disclosure.
FIG. 10 is a schematic diagram illustrating a reject cause X list according to an embodiment of the present disclosure.
FIG. 11 is a schematic diagram illustrating a reject cause X list according to an embodiment of the present disclosure.
FIG. 12 is a block diagram of a system for wireless communication according to an embodiment of the present disclosure.

### DETAILED DESCRIPTION OF EMBODIMENTS

Embodiments of the present disclosure are described in detail with the technical matters, structural features, achieved objects, and effects with reference to the accompanying drawings as follows. Specifically, the terminologies in the embodiments of the present disclosure are merely for describing the purpose of the certain embodiment, but not to limit the disclosure.

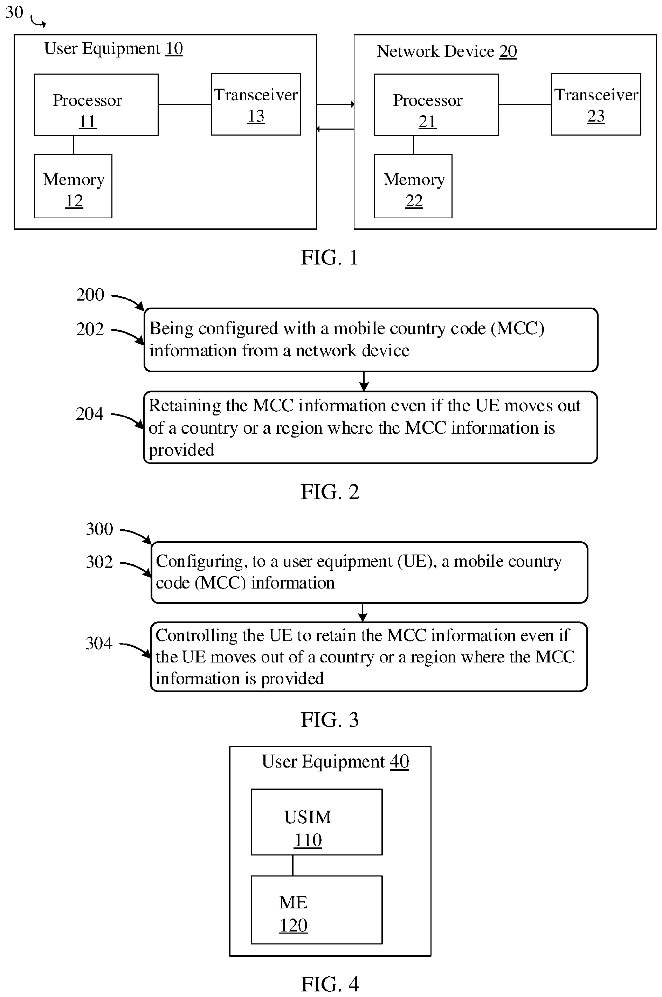

FIG. 1 illustrates that, in some embodiments, one or more user equipments (UEs) 10 and a network device 20 for transmission adjustment in a communication network system 30 according to an embodiment of the present disclosure are provided. The communication network system 30 includes the one or more UEs 10 and the network device 20. The one or more UEs 10 may include a memory 12, a transceiver 13, and a processor 11 coupled to the memory 12 and the transceiver 13. The network device 20 may include a memory 22, a transceiver 23, and a processor 21 coupled to the memory 22 and the transceiver 23. The processor 11 or 21 may be configured to implement proposed functions, procedures and/or methods described in this description. Layers of radio interface protocol may be implemented in the processor 11 or 21. The memory 12 or 22 is operatively coupled with the processor 11 or 21 and stores a variety of information to operate the processor 11 or 21. The transceiver 13 or 23 is operatively coupled with the processor 11 or 21, and the transceiver 13 or 23 transmits and/or receives a radio signal.

The processor 11 or 21 may include application-specific integrated circuit (ASIC), other chipset, logic circuit and/or data processing device. The memory 12 or 22 may include read-only memory (ROM), random access memory (RAM), flash memory, memory card, storage medium and/or other storage device. The transceiver 13 or 23 may include baseband circuitry to process radio frequency signals. When the embodiments are implemented in software, the techniques described herein can be implemented with modules (e.g., procedures, functions, and so on) that perform the functions described herein. The modules can be stored in the memory 12 or 22 and executed by the processor 11 or 21. The memory 12 or 22 can be implemented within the processor 11 or 21 or external to the processor 11 or 21 in which case those can be communicatively coupled to the processor 11 or 21 via various means as is known in the art.

The processor 11 is configured to be configured with a mobile country code (MCC) information from the network device 20. The processor 11 is configured to retain the MCC information even if the UE 10 moves out of a country or a region where the MCC information is provided. This can solve issues in the prior art, provide a method on management, control, and/or use of MCC information, improve power saving, provide saving of wasted signalling radio resources, provide a good communication performance, and/or provide high reliability.

The processor 21 is configured to configure, to the user equipment (UE) 10, a mobile country code (MCC) information. The processor 21 is configured to control the UE 10 to retain the MCC information even if the UE 10 moves out of a country or a region where the MCC information is provided. This can solve issues in the prior art, provide a method on management, control, and/or use of MCC information, improve power saving, provide saving of wasted signalling radio resources, provide a good communication performance, and/or provide high reliability.

FIG. 2 illustrates a method 200 of wireless communication by a user equipment (UE) 10 according to an embodiment of the present disclosure. In some embodiments, the method 200 includes: a block 202, being configured with a mobile country code (MCC) information from a network device, and a block 204, retaining the MCC information even if the UE moves out of a country or a region where the MCC information is provided. This can solve issues in the prior art, provide a method on management, control, and/or use of MCC information, improve power saving, provide saving of wasted signalling radio resources, provide a good communication performance, and/or provide high reliability.

FIG. 3 illustrates a method 300 of wireless communication by a network device 20 according to an embodiment of the present disclosure. The method 300 includes: a block 302, configuring, to a user equipment (UE), a mobile country code (MCC) information, and a block 304, controlling the UE to retain the MCC information even if the UE moves out of a country or a region where the MCC information is provided. This can solve issues in the prior art, provide a method on management, control, and/or use of MCC information, improve power saving, provide saving of wasted signalling radio resources, provide a good communication performance, and/or provide high reliability.

In some embodiments, the MCC information comprises a list of MCCs or a location of the list of MCCs. In some embodiments, the method further comprises reusing the MCC information retained by the UE if the UE moves back to the country or the region where the MCC information is provided. In some embodiments, the method further comprises performing a public land mobile network (PLMN) selection using the MCC information retained by the UE. In some embodiments, the PLMN selection comprises an automatic PLMN selection, a manual PLMN selection, or the automatic PLMN selection and the manual PLMN selection. In some embodiments, the UE comprises a mobile equipment (ME) and a universal subscriber identity module (USIM), and the MCC information is retained in the ME, the USIM, or the ME and the USIM. In some embodiments, the method further comprises deleting the MCC information when the USIM is changed.

FIG. 4 illustrates a mobile equipment (ME) and a universal subscriber identity module (USIM) of a UE according to an embodiment of the present disclosure. FIG. 4 illustrates a UE 40 which comprises several parts or components that altogether enables users of the UE 40 to access services provided by the network. In some embodiments, the UE 40 comprises a USIM 110 and a ME 120. In some embodiments, the USIM 110 is a special software application that provides various functions like providing identifier and authentication of the user's subscription, security key generations, etc. The USIM 110 runs on a tamper resistant secure hardware component, e.g., universal integrated circuit card (UICC). In some embodiments, the ME 120 denotes the wireless device comprising a hardware and a software needed to communicate with the network. The ME 120 may for example be a mobile phone, or smart phone, which can obtain network service when a UICC running the USIM 110 is inserted into the ME 120.

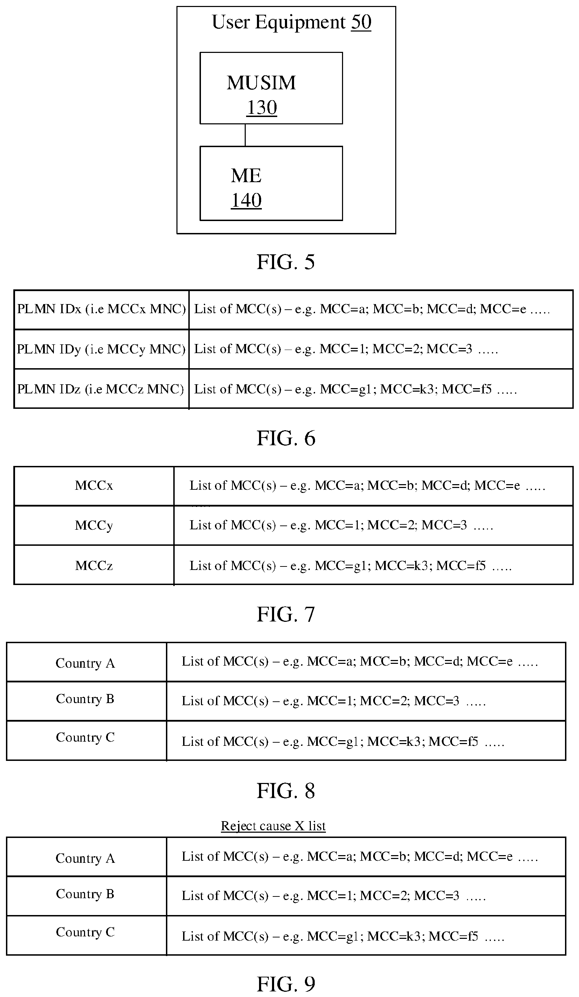

FIG. 5 illustrates a ME and a multi-universal subscriber identity module (MUSIM) of a UE, where in MUSIM is multiple occurrences of individual USIM each with its own distinct user subscription and profile, according to an embodiment of the present disclosure. FIG. 5 illustrates a UE 50 which comprises several parts or components that altogether enables users of the UE 50 to access services provided by the network. In some embodiments, the UE 50 comprises a MUSIM 130 and a ME 140. In some embodiments, the MUSIM 130 is a special software application that provides various functions like providing identifier and authentication of the user's subscription, security key generations, etc. The MUSIM 130 with multiple occurrences of individual USIM each with its own distinct user subscription and profile runs on a tamper resistant secure hardware component, e.g., universal integrated circuit card (UICC). In some embodiments, the ME 140 denotes the wireless device comprising a hardware and a software needed to communicate with the network. The ME 140 may for example be a mobile phone, or smart phone, which can obtain network service when a UICC running the MUSIM 130 is inserted into the ME 140.

In some embodiments, the MCC information corresponds to at least one of a PLMN information, an MCC, and a country information or a region information that provides the MCC information. In some embodiments, the UE comprises a multi-universal subscriber identity module (MUSIM), and the MCC information received for one USIM or one subscription of the MUSIM is applicable for another USIM or all other USIMs or another subscription or all other subscriptions of the MUSIM. In some embodiments, if the MCC information received for one USIM or one subscription of the MUSIM is removed and the MCC information received for another USIM or all other USIMs or another subscription or all other subscriptions of the MUSIM is retained, then the MCC information is retained in the UE. In some embodiments, the MCC information is retained when the UE is powered off. In some embodiments, the UE comprises global navigation satellite system (GNSS) capabilities configured to map GNSS derived geo-coordinates to local pre-configured data. In some embodiments, the MCC information is associated with a failed registration attempt or a failure to be allocated or requested any of resources.

The method further comprises transmitting a request associated with the MCC information to the network device. The request associated with MCC information is met with a request reject with the MCC information plus a reject cause. In some embodiments, the request associated with MCC information comprises a registration request, a service request, a PDU (protocol data unit) session establishment request, or a PDU session modification request. In some embodiments, the registration request, the service request, the PDU session establishment request, or the PDU session modification request is met with a registration reject, a service reject, a PDU session establishment reject, or a PDU session modification reject respectively with the MCC information plus a reject cause. In some embodiments, the reject cause indicates that a current network cannot provide a service to the UE in a current country or a current region or cannot operate in a country or a region the UE is located. In some embodiments, the UE receives the reject cause from the network device when the UE is configured with the MCC information from the network device. In some embodiments, the reject cause is retained as a new elementary file (EF) file on a USIM of the UE or stored in non-volatile memory or volatile memory of a ME of the UE. In some embodiments, the method further comprises being configured with a new MCC information and replacing the MCC information retained by the UE with the new MCC information. In some embodiments, the method further comprises being configured with a new MCC information and merging the new MCC information and the MCC information retained by the UE to form an updated MCC information.

In some embodiments, the receipt of a list of MCC(s) or MCC information in a location where a previous list of MCC(s) or MCC information had been received before and been retained, will replace that existing list of MCC(s) or MCC information with the new list of MCC(s) or MCC information. Yet in other embodiments, the receipt of a list of MCC(s) or MCC information in a location where a previous list of MCC(s) or MCC information had been received before and been retained, will merge the newly received list into the existing list of MCC(s) or MCC information to form an updated list or a new list.

In some embodiments, methods, solutions, and examples in the area of satellite networks are discussed and proposed. The satellite networks may refer to non-terrestrial networks (NTNs). The NTNs use a 3rd generation partnership project (3GPP) system to provide mobile services to the user. NTNs refer to networks, or segments of networks, using a spaceborne vehicle or an airborne vehicle for transmission. Spaceborne vehicles include satellites including low earth orbiting (LEO) satellites, medium earth orbiting (MEO) satellites, geostationary earth orbiting (GEO) satellites, and highly elliptical orbiting (HEO) satellites. Airborne vehicles include high altitude platforms (HAPs) encompassing unmanned aircraft systems (UAS) including lighter than air (LTA) unmanned aerial systems (UAS) and heavier than air (HTA) UAS, all operating in altitudes typically between 8 and 50 km, quasi-stationary.

A network (such as a 3GPP network, a 3GPP core Network, a satellite network, or a NTN) provides, to the UE (such as a mobile handset), a list of MCCs to facilitate, support, and/or assist the UE in selecting to PLMNs of recommended MCC(s). In some embodiments, a list of MCCs provided by the network the UE is registered to or attempting to registered to identifies for the UE the country the UE is physically in. From this, if this information is given to the UE when the network rejects the UE, at registration attempt or later on after registration or at time of request for resources, the UE would know to not select onto the same MCC or list of MCCs. In some embodiments, a recommended MCC list, a list of MCCs, or an indication of MCC(s) is provided to the UE by the network. In some embodiments, the UE is configured to perform a PLMN selection using the recommended MCC list, the list of MCCs, or the indication of MCC(s).

In some embodiments, how to manage this recommended MCC list by the UE is discussed. For example, there may be just one recommended MCC list in the UE or there may be the next received MCC list, the previously received MCC list is deleted or properly arranged, or the previous MCC list is kept and is of use later (examples are as illustrated in the above embodiments). For example, the UE may need to only have to factor in storage of just one such MCC list or more. For example, for what period of time will the provided list of MCCs be valid is discussed. For example, the list of the MCCs is valid still if the UE moves out of the location or country from which such the list of the MCCs is provided.

In some embodiments, the UE (such as the mobile handset) supports MUSIM. For example, the received MCC list is useful other that the USIM (or the user subscription) for which this MCC list is provided by the network. Furthermore, in a global environment, there are many different mobile networks. For instance, a subscriber of a PLMN operator can quite often obtain service over global system for mobile communications (GSM)/GSM enhanced data GSM environment (EDGE) radio access network (GERAN) network, universal mobile telecommunications system (UMTS) network, or long term evolution (LTE) network (so called 2G, 3G, or 4G network respectively). For example, the recommended MCC list is valid in such terrestrial networks.

In some embodiments, the UE (such as the mobile handset) can host more than one SIM/USIM (or more than one active user subscription). Given that all the SIMs of a multi-USIM handset will still be in one handset and the handset located in one country of one of those USIMs of a MUSIM handset would mean all USIMs are also located in that same country. For example, control, management, and use of the list of MCCs provided by one PLMN is of use to the other USIMs of the MUSIM handset. Therefore, in summary, the aspects of handling the received recommended MCC list, its storage, its use, reuse, and duration of its validity, i.e. the management and maintenance of this list of MCC, are addressed in some embodiments of the present disclosure.

With regards to the validity of the recommended MCC list to terrestrial networks and the validity of that list of MCC(s) beyond the country of the PLMN that provided that list, some embodiments are provided. There is current technology to suggest that the list of MCC are not valid for terrestrial networks and that the list of MCC(s) are only valid in the country over who's PLMN provided that MCC list. Apart from the current technology, some embodiments propose the following methods, examples, solutions, and enhancements, for the issues described above.

A list of MCC(s) provided by the network is kept even if the UE moves out of the country over which the list of MCC(s) is provided. In some examples, the kept list of MCC(s) can be reused if the UE moves back to the country over which the list of MCC(s) is provided. In some examples, reuse of this stored (and not deleted) list of MCC(s) for PLMN selection by the UE mitigates against wrong PLMNs selected which can result in the attempted registration to such PLMN being rejected. In some embodiments, keeping of the provided MCC list in a ME or a USIM or both. When stored in the ME, it can be kept in the non-volatile memory of the ME, although it is not excluded to be kept in a volatile part of the UE's memory. In some embodiments, over time a number of such stored list of MCC(s) can exist in the UE. Some embodiments impose no restriction on the number of these recommended MCC lists to be kept and the finite number stored depends on implementation, and might even be zero, i.e. none is stored, or at least one is stored and up to a maximum dependent on implementation.

FIG. 6 and FIG. 7 illustrate a MCC information according to an embodiment of the present disclosure. FIG. 6 and FIG. 7 illustrate that, in some embodiments, the list of MCC(s) is store against the PLMN or the MCC (or both) that provides the list of MCC(s). An example file structure of such storage is illustrated in FIG. 6 and FIG. 7. It is understood that what is represented in FIG. 6 and FIG. 7 is a logical concept. This present disclosure does not impose any physical manner such a logical concept will have on a UE implementation. Further what is illustrated in FIG. 6 and FIG. 7 is an example. Other conceptual storage models are possible that can fit this solution in its logical form.

In some embodiments, for a multi USIM device (MUSIM), the list(s) of MCC(s) received for one USIM (or subscription) is applicable for other USIMs of that MUSIM device. In some embodiments, the list of MCC(s) survives power cycle. That is to say, the stored list(s) of MCC(s) is kept when the UE is powered off. In some embodiments, the list(s) of MCC(s) can be deleted when the USIM is changed. However, for the case of MUSIM, if the USIM (the subscription) for which a list of MCC(s) or the lists of MCC(s) is/are received is removed but there remain one other USIM in a MUSIM device, the stored list(s) of MCC(s) is kept. In some examples, the list of MCC(s) or the indication of MCC by the network can - as a different embodiment or solution - informs by implication, the UE of its location.

In some embodiments, this list of MCC(s) or indication of MCC, likewise need to be managed and some embodiments of this present disclosure propose solutions as the following:
In some examples, the UE (such as the mobile handset) has built-in GNSS capabilities, that can determine the physical country the UE is in. Such derivation of the actual physical country e.g. knowing if the UE is in Germany or in China, could be done through mapping GNSS derived geo-coordinates to local pre-configured data such as digital maps. In some examples, knowing and having determined the country and if the list of MCC(s) provided by the network is to signify the MCCs of the UE's location, the UE can apply the above methods, solutions, and embodiments for the management, control, and use of the MCC list, list of MCC(s) or the indicated MCC.

FIG. 8 illustrates a MCC information according to an embodiment of the present disclosure. FIG. 8 illustrates that, in some embodiments, a logical storage of the list of MCC(s) or indication of MCC, will take the form of UE knowing from GNSS, the country it is physically in, against the received MCCs or MCC. FIG. 8 provides a logical conceptual example. Country is determined through GNSS plus other information such as digital maps or local pre-configuration data.

A further embodiment of all of the above is to tag or remember that the indication of MCC or list of MCC(s) provided by the network is with respect to a failed registration attempt or a failure to be allocated or requested any of resources because (as informed by the network) the UE is in a physical location/country where the network cannot operate or cannot provide service to the UE. For examples, a registration request, a service request, a PDU session establishment request, and a PDU session modification request are met with a registration reject, a service reject, a PDU session establishment reject, and a PDU session modification reject respectively with an indication of MCC or list of MCC(s) plus a reject cause indicating that the current network is one that cannot provide service to the UE in its current physical location/country or cannot operate in the country the UE is located.

FIG. 9, FIG. 10, and FIG. 11 illustrate a reject cause X list according to an embodiment of the present disclosure. A method of relating these indications of MCC or list of MCC(s) or recommended MCC list (as illustrated by example in FIG. 6, FIG. 7, and FIG. 8) to the reject cause is to consider the list or indication of MCC as "Reject cause X list " or "Reject cause X list of MCC" where X is the reject cause (or reject cause value) provided by the network when the network indicates the reject and when the network provides the MCC indication, list of MCC(s) or recommended MCC list, as illustrated in FIG. 9, FIG. 10, and FIG. 11.

In some embodiments, a further method of managing the received indication of MCC or lists of MCC(s) is that over time, at each occasion that the UE gets rejected by reject cause X (where here "X" is an example reject cause value), the UE builds up this "Reject cause X list". This "Reject cause X list" like the other lists suggested (by example) in FIG. 6, FIG. 7, and FIG. 8, can be maintained as new EF files on the USIM - see 3GPP TS 31.102 for definition and examples of EF files - or stored list in non-volatile memory or volatile memory on the mobile equipment (ME) itself, such as similarly suggested in methods indicated in the above some embodiments.

Benefits of such an extra information tagged to the indication of MCC or list of MCC(s), i.e. examples in 4, FIG. 7, or FIG. 8 with a tag to the reject cause, are clear when one considers the following. The benefit of storing and re-use of the indication of MCC or list of MCC(s) provided by the network, is when such indicated MCC(s) can be used as part of power up (after power off) of the UE or when UE returns to coverage after losing coverage. Consider if the UE powers off (or is last in coverage) when in a country that has MCC = 8x8 (for example). When the UE powers back ON again (or returns to coverage again), the UE will first attempt to look for its last registered PLMN (last RPLMN) - see 3GPP TS 23.122 - and failing that look for a PLMN in the country of the last RPLMN. Therefore, for this example, when the UE powers back on (or return to coverage), the UE if it cannot find the last RPLMN will search for PLMN(s) of MCC = 8x8 to make a registration attempt. However, if that UE powers back up (or return to coverage) in another country, the UE will not find its RPLMN not PLMNs of MCC = 8x8, then the UE will search for any PLMN to make an attempt. If the UE with its GNSS capability knows its physical location, could then make use of the country and MCC mapping (an example given in FIG. 8) to not attempt a registration knowing that registering to PLMNs of certain MCC (or MCC(s)) will result in a registration reject. Therefore, the storing and later reuse of the store MCC or list of MCC(s) can be used as described above and enhance the search for and selection of PLMN - amongst others - in the cases of UE power up or UE returning to coverage.

In some embodiments, extending the use of the methods above to automatic PLMN selection or manual PLMN selection or both would likewise be advantageous as it avoids unnecessary rejects by the network thus saving both signalling resources (of UE and network) and battery life (of UE) and in the case of satellites or other forms of NTN, saves on power reserves of satellites or other forms of NTN, too. Additionally, the elaborated methods, solutions, and embodiments in some embodiments of the present disclosure can also be used when the UE operates in a terrestrial network (TN) environment.

In summary, some embodiments have outlined methods, solutions, and examples that introduce the network providing a list of MCC(s) or the recommended list of MCC or the indication of a MCC to a UE. Methods and embodiments illustrate the use of the network provided information. It is understood that some embodiments propose methods, solutions, and example on managing the received information and its reuse when such information becomes valid again. In some embodiments, through such reuse, the UE's selection of PLMN can be better made and thus result in avoiding excessive rejects by the network. Additionally, by further embodiments and solutions, the management and use of the stored indication of MCC or the list of MCC(s) provided by the network is illustrated above to be beneficial when used in occasions like power on after power off (or used when UE returns to coverage after losing coverage) where the last RPLMN can no longer be found but new PLMNs even that of a different MCC (or MCCs) are available. And as detailed in previous embodiments, those methods will equally assist in cases of automatic PLMN selection or manual PLMN selection or both. Additionally, by so doing and avoiding unnecessary reject - because wrong PLMNs get selected - there brings benefits of power saving of both UE and satellite and saving of wasted signalling radio resources. Whilst some embodiments of the present disclosure discuss the topics in the context of NTN and Satellite networks, all the discussed methods, solutions, and embodiments are workable in the case the UE operates in a terrestrial network (TN) environment.

Commercial interests for some embodiments are as follows. 1. Solving issues in the prior art. 2. Provide a method on management, control, and/or use of MCC information. 3. Improving power saving. 4. Providing saving of wasted signalling radio resources. 5. Providing a good communication performance. 6. Providing high reliability. 7. Some embodiments of the present disclosure are used by 5G-NR chipset vendors, V2X communication system development vendors, automakers including cars, trains, trucks, buses, bicycles, moto-bikes, helmets, and etc., drones (unmanned aerial vehicles), smartphone makers, communication devices for public safety use, AR/VR device maker for example gaming, conference/seminar, education purposes. The deployment scenarios include, but not limited to, indoor hotspot, dense urban, urban micro, urban macro, rural, factor hall, and indoor D2D scenarios. Some embodiments of the present disclosure are a combination of "techniques/processes" that can be adopted in 3GPP specification to create an end product. Some embodiments of the present disclosure could be adopted in 5G NR licensed and non-licensed or shared spectrum communications. Some embodiments of the present disclosure propose technical mechanisms. The present example embodiment is applicable to NR in unlicensed spectrum (NR-U). The present disclosure can be applied to other mobile networks, in particular to mobile network of any further generation cellular network technology (6G, etc.).

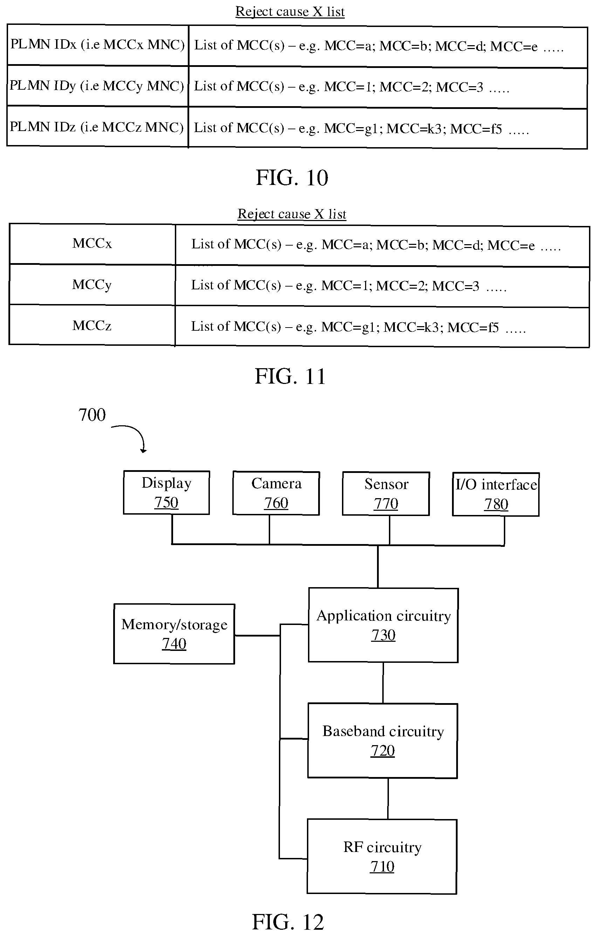

FIG. 12 is a block diagram of an example system 700 for wireless communication according to an embodiment of the present disclosure. Embodiments described herein may be implemented into the system using any suitably configured hardware and/or software. FIG. 12 illustrates the system 700 including a radio frequency (RF) circuitry 710, a baseband circuitry 720, an application circuitry 730, a memory/storage 740, a display 750, a camera 760, a sensor 770, and an input/output (I/O) interface 780, coupled with each other at least as illustrated. The application circuitry 730 may include a circuitry such as, but not limited to, one or more single-core or multi-core processors. The processors may include any combination of general-purpose processors and dedicated processors, such as graphics processors, application processors. The processors may be coupled with the memory/storage and configured to execute instructions stored in the memory/storage to enable various applications and/or operating systems running on the system.

The baseband circuitry 720 may include circuitry such as, but not limited to, one or more single-core or multi-core processors. The processors may include a baseband processor. The baseband circuitry may handle various radio control functions that enables communication with one or more radio networks via the RF circuitry. The radio control functions may include, but are not limited to, signal modulation, encoding, decoding, radio frequency shifting, etc. In some embodiments, the baseband circuitry may provide for communication compatible with one or more radio technologies. For example, in some embodiments, the baseband circuitry may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry is configured to support radio communications of more than one wireless protocol may be referred to as multi-mode baseband circuitry.

In various embodiments, the baseband circuitry 720 may include circuitry to operate with signals that are not strictly considered as being in a baseband frequency. For example, in some embodiments, baseband circuitry may include circuitry to operate with signals having an intermediate frequency, which is between a baseband frequency and a radio frequency. The RF circuitry 710 may enable communication with wireless networks using modulated electromagnetic radiation through a non-solid medium. In various embodiments, the RF circuitry may include switches, filters, amplifiers, etc. to facilitate the communication with the wireless network. In various embodiments, the RF circuitry 710 may include circuitry to operate with signals that are not strictly considered as being in a radio frequency. For example, in some embodiments, RF circuitry may include circuitry to operate with signals having an intermediate frequency, which is between a baseband frequency and a radio frequency.

In various embodiments, the transmitter circuitry, control circuitry, or receiver circuitry discussed above with respect to the user equipment, eNB, or gNB may be embodied in whole or in part in one or more of the RF circuitry, the baseband circuitry, and/or the application circuitry. As used herein, "circuitry" may refer to, be part of, or include an Application Specific Integrated Circuit (ASIC), an electronic circuit, a processor (shared, dedicated, or group), and/or a memory (shared, dedicated, or group) that execute one or more software or firmware programs, a combinational logic circuit, and/or other suitable hardware components that provide the described functionality. In some embodiments, the electronic device circuitry may be implemented in, or functions associated with the circuitry may be implemented by, one or more software or firmware modules. In some embodiments, some or all of the constituent components of the baseband circuitry, the application circuitry, and/or the memory/storage may be implemented together on a system on a chip (SOC). The memory/storage 740 may be used to load and store data and/or instructions, for example, for system. The memory/storage for one embodiment may include any combination of suitable volatile memory, such as dynamic random access memory (DRAM)), and/or non-volatile memory, such as flash memory.

In various embodiments, the I/O interface 780 may include one or more user interfaces designed to enable user interaction with the system and/or peripheral component interfaces designed to enable peripheral component interaction with the system. User interfaces may include, but are not limited to a physical keyboard or keypad, a touchpad, a speaker, a microphone, etc. Peripheral component interfaces may include, but are not limited to, a non-volatile memory port, a universal serial bus (USB) port, an audio jack, and a power supply interface. In various embodiments, the sensor 770 may include one or more sensing devices to determine environmental conditions and/or location information related to the system. In some embodiments, the sensors may include, but are not limited to, a gyro sensor, an accelerometer, a proximity sensor, an ambient light sensor, and a positioning unit. The positioning unit may also be part of, or interact with, the baseband circuitry and/or RF circuitry to communicate with components of a positioning network, e.g., a global positioning system (GPS) satellite.

In various embodiments, the display 750 may include a display, such as a liquid crystal display and a touch screen display. In various embodiments, the system 700 may be a mobile computing device such as, but not limited to, a laptop computing device, a tablet computing device, a netbook, an ultrabook, a smartphone, an AR/VR glasses, etc. In various embodiments, system may have more or less components, and/or different architectures. Where appropriate, methods described herein may be implemented as a computer program. The computer program may be stored on a storage medium, such as a non-transitory storage medium.

A person having ordinary skill in the art understands that each of the units, algorithm, and steps described and disclosed in the embodiments of the present disclosure are realized using electronic hardware or combinations of software for computers and electronic hardware. Whether the functions run in hardware or software depends on the condition of application and design requirement for a technical plan. A person having ordinary skill in the art can use different ways to realize the function for each specific application while such realizations should not go beyond the scope of the present disclosure. It is understood by a person having ordinary skill in the art that he/she can refer to the working processes of the system, device, and unit in the above-mentioned embodiment since the working processes of the above-mentioned system, device, and unit are basically the same. For easy description and simplicity, these working processes will not be detailed.

It is understood that the disclosed system, device, and method in the embodiments of the present disclosure can be realized with other ways. The above-mentioned embodiments are exemplary only. The division of the units is merely based on logical functions while other divisions exist in realization. It is possible that a plurality of units or components are combined or integrated in another system. It is also possible that some characteristics are omitted or skipped. On the other hand, the displayed or discussed mutual coupling, direct coupling, or communicative coupling operate through some ports, devices, or units whether indirectly or communicatively by ways of electrical, mechanical, or other kinds of forms.

The units as separating components for explanation are or are not physically separated. The units for display are or are not physical units, that is, located in one place or distributed on a plurality of network units. Some or all of the units are used according to the purposes of the embodiments. Moreover, each of the functional units in each of the embodiments can be integrated in one processing unit, physically independent, or integrated in one processing unit with two or more than two units.

If the software function unit is realized and used and sold as a product, it can be stored in a readable storage medium in a computer. Based on this understanding, the technical plan proposed by the present disclosure can be essentially or partially realized as the form of a software product. Or, one part of the technical plan beneficial to the conventional technology can be realized as the form of a software product. The software product in the computer is stored in a storage medium, including a plurality of commands for a computational device (such as a personal computer, a server, or a network device) to run all or some of the steps disclosed by the embodiments of the present disclosure. The storage medium includes a USB disk, a mobile hard disk, a read-only memory (ROM), a random access memory (RAM), a floppy disk, or other kinds of media capable of storing program codes.

## Claims

1. A wireless communication method (200) performed by a user equipment, UE, the method comprising:
being configured (202) with a mobile country code, MCC, information from a network device, wherein the MCC information comprises a list of MCCs;
retaining (204) the MCC information even if the UE moves out of a country or a region where the MCC information is provided;
transmitting a registration request associated with the MCC information to the network device; and
receiving from the network device a registration reject with the MCC information plus a reject cause,
wherein the MCC information is associated by the UE with the registration reject.

2. The method of claim 1, further comprising performing a public land mobile network, PLMN, selection using the MCC information retained by the UE, wherein the PLMN selection comprises an automatic PLMN selection.

3. The method of claim 1, wherein the UE comprises a mobile equipment, ME, and a universal subscriber identity module, USIM, and the MCC information is retained in the ME, the USIM, or the ME and the USIM.

4. The method of claim 3, further comprising deleting the MCC information when the USIM is changed.

5. The method of claim 1, wherein the UE comprises a multi-universal subscriber identity module, MUSIM, and the MCC information received for one USIM or one subscription of the MUSIM is applicable for another USIM or all other USIMs or all other USIMs or another subscription or all other subscriptions of the MUSIM.

6. The method of claim 5, wherein if the MCC information received for one USIM or one subscription of the MUSIM is removed and the MCC information received for another USIM or all other USIMs or another subscription or all other subscriptions of the MUSIM is retained, then the MCC information is retained in the UE.

7. The method of claim 1, wherein the reject cause indicates that a current network cannot provide a service to the UE in a current country or a current region or cannot operate in a country or a region the UE is located.

8. The method of claim 1, wherein the UE receives the reject cause from the network device when the UE is configured with the MCC information from the network device.

9. The method of claim 1, wherein the reject cause is retained as a new elementary file, EF, file on a USIM of the UE or stored in non-volatile memory or volatile memory of a ME of the UE.

10. The method of claim 1, further comprising being configured with a new MCC information, and replacing the MCC information retained by the UE with the new MCC information.

11. The method of claim 1, further comprising being configured with a new MCC information, and merging the new MCC information and the MCC information retained by the UE to form an updated MCC information.

12. A user equipment, UE, comprising:
a memory for storing a computer program;
a transceiver; and
a processor coupled to the memory and the transceiver;
wherein the processor is configured to call and run the computer program stored in the memory to cause the UE to perform the method according to any one of claims 1 to 11.

13. A network device, comprising:
a memory;
a transceiver; and
a processor coupled to the memory and the transceiver;
wherein the processor is configured to configure, to a user equipment, UE, with a mobile country code, MCC information, wherein the MCC information comprises a list of MCCs;
wherein the processor is configured to control the UE to retain the MCC information even if the UE moves out of a country or a region where the MCC information is provided; and
wherein the transceiver is configured to receive a registration request associated with the MCC information from the UE, and transmit to the UE a registration reject with the MCC information plus a reject cause to control the UE to associate the MCC information with the registration reject.

14. The network device of claim 13, wherein the processor is configured to control the UE to perform a public land mobile network, PLMN, selection using the MCC information retained by the UE, and wherein the PLMN selection comprises an automatic PLMN selection.

## Patentansprüche

1. Drahtloses Kommunikationsverfahren (200), ausgeführt durch eine Benutzereinrichtung, UE, wobei das Verfahren umfasst:
Konfigurieren (202) mit einer Mobilfunk-Ländercode-Information, MCC-Information, von einer Netzwerkvorrichtung, wobei die MCC-Information eine Liste von MCCs umfasst;
Beibehalten (204) der MCC-Information, selbst wenn die UE ein Land oder eine Region verlässt, in der die MCC-Information bereitgestellt wird;
Übermitteln einer der MCC-Information zugeordneten Registrierungsanfrage an die Netzwerkvorrichtung; und
Empfangen einer Registrierungsablehnung mit der MCC-Information zuzüglich eines Ablehnungsgrunds von der Netzwerkvorrichtung, wobei die MCC-Information durch die UE der Registrierungsablehnung zugeordnet wird.

2. Verfahren nach Anspruch 1, ferner umfassend Durchführen einer Auswahl eines öffentlichen Mobilfunknetzes, PLMN, unter Verwendung der durch die UE beibehaltenen MCC-Information, wobei die PLMN-Auswahl eine automatische PLMN-Auswahl umfasst.

3. Verfahren nach Anspruch 1, wobei die UE eine mobile Ausrüstung, ME, und ein universelles Teilnehmeridentitätsmodul, USIM, umfasst und die MCC-Information in der ME, im USIM oder in der ME und im USIM beibehalten wird.

4. Verfahren nach Anspruch 3, ferner umfassend Löschen der MCC-Information, wenn das USIM gewechselt wird.

5. Verfahren nach Anspruch 1, wobei die UE ein "Multi-Universal-Subscriber-Identity-Modul", MUSIM, umfasst und die für ein USIM oder ein Abonnement des MUSIM empfangene MCC-Information auch für ein anderes USIM oder alle anderen USIMs oder alle anderen USIMs oder ein anderes Abonnement oder alle anderen Abonnements des MUSIM anwendbar ist.

6. Verfahren nach Anspruch 5, wobei, wenn die für ein USIM oder ein Abonnement des MUSIM empfangene MCC-Information entfernt wird und die für ein anderes USIM oder alle anderen USIMs oder ein anderes Abonnement oder alle anderen Abonnements des MUSIM empfangene MCC-Information beibehalten wird, die MCC-Information in der UE beibehalten wird.

7. Verfahren nach Anspruch 1, wobei der Ablehnungsgrund angibt, dass ein aktuelles Netzwerk der UE in einem aktuellen Land oder einer aktuellen Region keinen Dienst bereitstellen kann oder in einem Land oder einer Region, in dem/der sich die UE befindet, nicht betrieben werden kann.

8. Verfahren nach Anspruch 1, wobei die UE den Ablehnungsgrund von der Netzwerkvorrichtung empfängt, wenn die UE mit der MCC-Information von der Netzwerkvorrichtung konfiguriert wird.

9. Verfahren nach Anspruch 1, wobei der Ablehnungsgrund als neue Elementardatei, EF-Datei, auf einem USIM der UE beibehalten oder im nichtflüchtigen Speicher oder flüchtigen Speicher einer ME der UE gespeichert wird.

10. Verfahren nach Anspruch 1, ferner umfassend Konfigurieren mit einer neuen MCC-Information und Ersetzen der durch die UE beibehaltenen MCC-Information durch die neue MCC-Information.

11. Verfahren nach Anspruch 1, ferner umfassend Konfigurieren mit einer neuen MCC-Information und Zusammenführen der neuen MCC-Information und der durch die UE beibehaltenen MCC-Information zu einer aktualisierten MCC-Information.

12. Benutzereinrichtung, UE, umfassend:
einen Speicher zur Speicherung eines Computerprogramms,
eine Sende-/Empfangseinheit, und
einen mit dem Speicher und der Sende-/Empfangseinheit gekoppelten Prozessor,
wobei der Prozessor dafür konfiguriert ist, das im Speicher gespeicherte Computerprogramm aufzurufen und auszuführen, um die UE zu veranlassen, das Verfahren nach einem der Ansprüche 1 bis 11 auszuführen.

13. Netzwerkvorrichtung, umfassend:
einen Speicher,
eine Sende-/Empfangseinheit, und
einen mit dem Speicher und der Sende-/Empfangseinheit gekoppelten Prozessor,
wobei der Prozessor dazu ausgelegt ist, eine Benutzereinrichtung, UE, mit einer Mobilfunk-Ländercode-Information, MCC-Information, zu konfigurieren, wobei die MCC-Information eine Liste von MCCs umfasst;
wobei der Prozessor dafür konfiguriert ist, die UE anzuweisen, die MCC-Information beizubehalten, selbst wenn die UE ein Land oder eine Region verlässt, in der die MCC-Information bereitgestellt wird; und
wobei die Sende-/Empfangseinheit dazu ausgelegt ist, eine der MCC-Information zugeordnete Registrierungsanfrage von der UE zu empfangen und an die UE eine Registrierungsablehnung mit der MCC-Information zuzüglich eines Ablehnungsgrunds zu übermitteln, um die UE dazu zu veranlassen, die MCC-Information der Registrierungsablehnung zuzuordnen.

14. Netzwerkvorrichtung nach Anspruch 13, wobei der Prozessor dafür konfiguriert ist, die UE anzuweisen, eine Auswahl eines öffentlichen Mobilfunknetzes, PLMN, unter Verwendung der durch die UE beibehaltenen MCC-Information durchzuführen, und wobei die PLMN-Auswahl eine automatische PLMN-Auswahl umfasst.

## Revendications

1. Procédé de communication sans fil (200) réalisé par un équipement d'utilisateur (UE), le procédé comprenant les étapes consistant à :
être configuré (202) avec des informations de code pays de réseau mobile (MCC) en provenance d'un dispositif de réseau, les informations MCC comprenant une liste de MCC ;
conserver (204) les informations MCC même si l'UE quitte un pays ou une région où les informations MCC sont fournies ;
émettre, vers le dispositif de réseau, une demande d'enregistrement associée aux informations MCC ; et
recevoir, en provenance du dispositif de réseau, un rejet d'enregistrement avec les informations MCC plus une cause de rejet,
les informations MCC étant associées par l'UE au rejet d'enregistrement.

2. Procédé selon la revendication 1, comprenant en outre l'étape consistant à réaliser une sélection de réseau mobile terrestre public (PLMN) au moyen des informations MCC conservées par l'UE, la sélection PLMN comprenant une sélection PLMN automatique.

3. Procédé selon la revendication 1, l'UE comprenant un équipement mobile (ME) et un module d'identité d'abonné universel (USIM), et les informations MCC étant conservées dans le ME ou l'USIM ou bien dans le ME et l'USIM.

4. Procédé selon la revendication 3, comprenant en outre l'étape consistant à supprimer les informations MCC lorsque l'USIM est changé.

5. Procédé selon la revendication 1, l'UE comprenant un module d'identité d'abonné universel multiple (MUSIM), et les informations MCC reçues pour un USIM ou un abonnement du MUSIM étant applicables à un autre USIM ou à tous les autres USIM ou à tous les autres USIM ou à un autre abonnement ou à tous les autres abonnements du MUSIM.

6. Procédé selon la revendication 5, si les informations MCC reçues pour un USIM ou un abonnement du MUSIM sont supprimées et que les informations MCC reçues pour un autre USIM ou tous les autres USIM ou un autre abonnement ou tous les autres abonnements du MUSIM sont conservées, alors les informations MCC étant conservées dans l'UE.

7. Procédé selon la revendication 1, la cause de rejet indiquant qu'un réseau actuel ne peut pas fournir un service à l'UE dans un pays actuel ou une région actuelle ou ne peut pas fonctionner dans un pays ou une région où se trouve l'UE.

8. Procédé selon la revendication 1, l'UE recevant la cause de rejet en provenance du dispositif de réseau lorsque l'UE est configuré avec les informations MCC en provenance du dispositif de réseau.

9. Procédé selon la revendication 1, la cause de rejet étant conservée en tant que nouveau fichier élémentaire (EF) sur un USIM de l'UE ou stockée dans une mémoire non volatile ou une mémoire volatile d'un ME de l'UE.

10. Procédé selon la revendication 1, comprenant en outre les étapes consistant à être configuré avec de nouvelles informations MCC et à remplacer les informations MCC conservées par l'UE par les nouvelles informations MCC.

11. Procédé selon la revendication 1, comprenant en outre les étapes consistant à être configuré avec de nouvelles informations MCC et à fusionner les nouvelles informations MCC et les informations MCC conservées par l'UE afin de former des informations MCC mises à jour.

12. Équipement d'utilisateur (UE), comprenant :
une mémoire pour stocker un programme informatique ;
un émetteur-récepteur ; et
un processeur couplé à la mémoire et à l'émetteur-récepteur ;
le processeur étant configuré pour appeler et exécuter le programme informatique stocké dans la mémoire pour amener l'UE à réaliser le procédé selon l'une quelconque des revendications 1 à 11.

13. Dispositif de réseau, comprenant :
une mémoire ;
un émetteur-récepteur ; et
un processeur couplé à la mémoire et à l'émetteur-récepteur ;
le processeur étant configuré pour configurer un équipement d'utilisateur (UE) avec des informations de code pays de réseau mobile (MCC), les informations MCC comprenant une liste de MCC ;
le processeur étant configuré pour commander l'UE pour qu'il conserve les informations MCC même si l'UE quitte un pays ou une région où les informations MCC sont fournies ; et
l'émetteur-récepteur étant configuré pour recevoir, en provenance de l'UE, une demande d'enregistrement associée aux informations MCC, et émettre, vers l'UE, un rejet d'enregistrement avec les informations MCC plus une cause de rejet pour commander l'UE pour qu'il associe les informations MCC au rejet d'enregistrement.

14. Dispositif de réseau selon la revendication 13, le processeur étant configuré pour commander l'UE pour qu'il réalise une sélection de réseau mobile terrestre public (PLMN) au moyen des informations MCC conservées par l'UE, et la sélection PLMN comprenant une sélection PLMN automatique.
